# EUROPÄISCHE PATENTSCHRIFT

(11) **EP 2 922 184 B1**
(45) Veröffentlichungstag und Bekanntmachung des Hinweises auf die Patenterteilung: **01.05.2019**
(21) Anmeldenummer: 14161067.5
(22) Anmeldetag: 21.03.2014
(51) Int. Cl.: H02K 7/116, H02K 5/04, B60T 7/10, B60T 13/74, F16D 65/18, F16D 121/24, F16D 125/48, F16D 55/08

(54) **Aktuatoranordnung**
Actuator assembly
Système d'actionneurs

(43) Veröffentlichungstag der Anmeldung: 23.09.2015
(73) Patentinhaber: IMS Gear SE & Co. KGaA, 78166 Donaueschingen (DE)
(72) Erfinder: Fechler, Jens, 78183 Hüfingen (DE); Ambs, Marcel, 78120 Furtwangen (DE); Karnat, Björn, 79232 March (DE)
(74) Vertreter: Westphal, Mussgnug & Partner Patentanwälte mbB

(56) Entgegenhaltungen:
- WO-A1-03/008248
- WO-A1-2011/076299
- DE-A1-102008 030 535

## Beschreibung

Die Erfindung betrifft eine Aktuatoranordnung für eine Bremse, insbesondere eine elektrische Parkbremse und/oder elektromechanische Betriebsbremse, wie diese insbesondere in Kraftfahrzeugen Verwendung findet, gemäß den Merkmalen des Oberbegriffs des Anspruchs 1.

Eine solche Aktuatoranordnung ist beispielsweise aus
DE 10 2008 030 535 A1 bekannt. Die Aktuatoranordnung ist modulartig aufgebaut und verfügt über eine sattelartige Bremseinheit. In dem Gehäuse dieser Bremseinheit sind in an sich bekannter Weise zwei gegenüberliegende Bremsbeläge angeordnet, von denen zumindest einer über einen Bremskolben auf einen anderen zu verlagerbar ist. Zur Verlagerung des Bremskolbens dient die Aktuatoranordnung. Diese verfügt über einen Elektromotor und eine vom Elektromotor angetriebene, als Untersetzungsgetriebe ausgebildete Getriebeeinheit. Ausgangsseitig ist die Getriebeeinheit mit einer Bremsbelagverstelleinheit gekoppelt, um eine im Inneren der Bremsbelagverstelleinheit befindlichen Kolben axial zu bewegen. Die Verschiebung dieses Kolbens führt dann schließlich zur Verlagerung des Bremsbelags. Die Aktuatoranordnung ist dabei über geeignete Verbindungsschrauben an das Gehäuse der Bremseinheit festgeschraubt. Die Getriebeeinheit weist einen Riemen auf, der einerseits um das Abtriebsritzel des Elektromotors kraftübertragend herumgeführt ist und ferner an einem Antriebszahnrad eines Planetengetriebes angreift. Ausgangsseitig ist das Planetengetriebe dazu vorgesehen, drehfest mit einer in der Bremsbelagverstelleinheit befindlichen Drehspindel in Drehung zu versetzen, welche stirnseitig den erwähnten Kolben bewegt. Eine ähnliche Aktuatoranordnung ist aus der WO 2011/076299 A1 bekannt. Eine etwas anders aufgebaute Aktuatoranordnung ist in der WO 2003/008 248 A1 beschrieben.

Bei der aus der DE 10 2008 030 535 A1 bekannten Bremseinheit sind das Gehäuse der Bremseinheit, die elektromotorische Antriebseinheit mit dem Elektromotor, die Getriebeeinheit und die Steuereinheit bereits als separate Module ausgebildet. Je nach Bedarf lässt sich deshalb eines der Module gegen ein entsprechend anders ausgelegtes Modul ersetzen, sofern die mechanischen Schnittstellen der Einzelmodule untereinander beibehalten werden. Dennoch ist diese bekannte Bremseinheit hinsichtlich eines einfachen Aufbaus, einer kostengünstigen Herstellung und ihrer Anpassungsmöglichkeiten an unterschiedliche Anforderungen verbesserbar.

Hier setzt die vorliegende Erfindung an.

Die Erfindung hat das Ziel, die bekannte Aktuatoranordnung für eine elektrische Parkbremse bei Kraftfahrzeugen so weiterzubilden, dass diese noch einfacher aufgebaut und kostengünstiger herstellbar ist. Insbesondere sollen anwenderspezifische Bedürfnisse hinsichtlich der unterschiedlichen Schnittstellen der Aktuatoranordnung voneinander unabhängig und applikationsspezifisch in besonders einfacher Weise angepasst werden können.

Dieses Ziel wird durch eine Aktuatoranordnung mit den Merkmalen des Anspruchs 1 gelöst.

Weiterbildungen einer solchen Aktuatoranordnung sind in den Unteransprüchen angegeben.

Die erfinderische Lösung besteht darin, die Befestigungsmittel zum Befestigen der Aktuatoranordnung am Bremssattel oder der Bremsbelagverstelleinheit als separates Teil, insbesondere Austauschteil, auszubilden und mit Befestigungsöffnungen zu versehen, wobei diese Befestigungsmittel drehfest an der Aktuatoranordnung festgelegt sind. Um den unterschiedlichen Befestigungsbedingungen der verschiedenen Kunden gerecht zu werden, ist es demnach lediglich notwendig, unterschiedliche separate Teile, in die die Befestigungsöffnungen kundenspezifisch eingearbeitet sind, vorzusehen. Die übrige Aktuatoranordnung braucht hingegen nicht verändert zu werden.

In einer Weiterbildung der Erfindung sind diese Befestigungsmittel entweder als Einschiebeteil nach Art einer Nut-Feder-Verbindung gestaltet oder als Aufsteckteil ausgebildet. Vorzugsweise sind diese Befestigungsmittel als Stanzteil, insbesondere als metallisches Stanzteil hergestellt.

In einer Weiterbildung der Erfindung besteht das erwähnte Umgehäuse aus Kunststoff. Dabei ist das Umgehäuse zweckmäßigerweise als zylindrischer Kunststofftopf ausgebildet, in welchen der Elektromotor mit seinem eigenen Motorgehäuse aufgenommen ist. Die Steckeraufnahme ist dabei erfindungsgemäß einstückig an den zylindrischen Kunststofftopf angeformt und zwar bevorzugterweise an die zylindrische Außenwandung des Kunststofftopfes.

Wenngleich es grundsätzlich möglich ist, dass die Getriebeeinheit beliebig gestaltet ist und unterschiedlichste Getriebeelemente aufweisen kann, bietet es sich an und liegt im Rahmen der vorliegenden Erfindung, dass die einzelnen Getriebeelemente ein von der Motorwelle direkt angetriebenes zweistufiges Schraubradgetriebe aufweisen, welches abtriebsseitig eine Welle aufweist, die z.B. drehfest mit einer in der Bremsbelagverstelleinheit befindliche Drehspindel antreibt.

In einer Weiterbildung der Erfindung ist die Getriebeeinheit mit ihren Getriebeelementen sowie deren Halteelemente im Inneren eines Getriebeträgertopfes, welcher ein Gehäuseteil des Gehäuses bildet, aufgenommen. An dem Boden dieses Getriebeträgertopfes sind zwei Ausnehmungen vorgesehen, durch welche die Motorwelle des Elektromotors einerseits und andererseits eine Ausgangswelle der Getriebeeinheit ragt. Auf der Motorwelle des Elektromotors kann dabei ein Ritzel angeordnet sein, das durch die erwähnte Ausnehmung ebenfalls geführt ist. Zweckmäßigerweise wird dieser Getriebeträgertopf auf der den beiden Ausnehmungen gegenüberliegenden Seite von einem Gehäusedeckel verschlossen.

In einer anderen Ausbildung der Erfindung ist vorgesehen, dass nicht nur das Umgehäuse, das den Elektromotor aufnimmt, aus Kunststoff besteht, sondern zusätzlich auch der Getriebeträgertopf, wobei der Getriebeträgertopf an seinem Boden eine rotationssymmetrische Fügeverbindung aufweist, an den das Umgehäuse feststehend mit dem Getriebeträgertopf aneinandergefügt ist. Dieses Aneinanderfügen kann mittels stoffschlüssiger Verbindungstechnik, wie beispielsweise Ultraschallschweißen, Laserschweißen oder Verkleben, alternativ aber auch durch andere form- oder kraftschlüssige Verbindungen, erfolgen.

Die Erfindung sieht des Weiteren vor, dass die oben erwähnten Befestigungsmittel als metallisches Stanzteil beziehungsweise metallisches Stanzbiegeteil ausgebildet sind. Ein solches Befestigungsmittel kann beispielsweise aus einem Blech hergestellt sein. Alternativ kann das Befestigungsmittel auch als Kunststoffteil hergestellt werden. Dabei können die Befestigungsmittel entweder als Einschiebeteil nach Art einer Nut-Feder-Verbindung an den Getriebeträgertopf angreifen und dort verdrehfest festgelegt sein oder aber als Aufsteckteil, wobei die Befestigungsmittel dann zweckmäßigerweise als Befestigungskorb ausgebildet sind.

Bei der Ausbildung der Befestigungsmittel als Einschiebeteil, ist dieses in einfacher Art und Weise spangenartig oder mindestens annähernd U-förmig gestaltet und kann in eine entsprechend umlaufende Nut, die in die Umfangswandung des Getriebeträgertopfes eingearbeitet ist, eingesetzt werden. Dort kann das Einschiebeteil durch seine Form, zusätzliche Drehmomentaufnahmen sowie bei Bedarf auch zusätzlich über Stifte und/oder Bolzen drehfest fixiert werden.

In einer zusätzlichen Ausführung der Erfindung kann vorgesehen werden, dass die Befestigungsmittel an Rastnasen des Getriebeträgertopfes und/oder des Gehäusedeckels der Aktuatoranordnung festgelegt werden.

Bei dem erwähnten modulartigen Aufbau der gesamten Aktuatoranordnung mit Getriebeträgertopf, Gehäusedeckel, Befestigungsmittel und Umgehäuse für den Elektromotor hat es sich als besonders günstig erwiesen, die Getriebeträgertöpfe und die zugehörenden Gehäusedeckel in unterschiedlichen Größen vorzuhalten, die durch den Achsabstand der Motorwelle zur Ausgangswelle der Getriebeeinheit bedingt sind. Bei all diesen auch unterschiedlich großen Teilen wird erfindungsgemäß jedoch darauf geachtet, dass die Schnittstellen für die erwähnten Befestigungsmittel, also das zur Befestigung vorgesehene Einschiebeteil oder das Aufsteckteil einerseits und das Umgehäuse für den Motor immer identisch ausgebildet sind. Hierdurch wird ein hohes Maß an Flexibilität erreicht, ohne dabei komplett anders gestaltete Gehäuseteile vorhalten zu müssen. Demzufolge können mit dem erfindungsgemäß vorgeschlagenen, modularen Aufbau der Aktuatoreinrichtung kundenspezifische Schnittstellen, wie Steckeranschluss, Anschraubaugen zur Befestigung der Aktuatoranordnung, Achsabstand zwischen Motor- und Abtriebswelle, an der Aktuatoreinrichtung einer elektrischen Feststellbremse, beziehungsweise einer elektromechanischen Betriebsbremse voneinander völlig unabhängig und applikationsspezifisch angepasst werden. Vorteilhafterweise müssen dank der Erfindung nicht mehr komplette neue Gehäuse konzipiert und bereitgestellt werden, insbesondere dann nicht, wenn lediglich eine einzige der beschriebenen Kundenschnittstellen spezifisch angepasst werden muss. Die erfindungsgemäße Aktuatoreinrichtung hat den entscheidenden Vorteil, dass jede der erwähnten Schnittstellen, also Steckeranschluss, Anschraubaugen und Achsabstand von Motor- zur Abtriebswelle, auf einem separaten Gehäuseteil positioniert wird. Sämtliche Gehäuseteile können durch standardisierte Schnittstellen an der Aktuatoreinrichtung miteinander verbunden werden.

Weiterhin kann vorgesehen sein, dass der Elektromotor, der regelmäßig bereits in einem eigenen in der Regel metallischen, topfförmigen Gehäuse sitzt, zusätzlich von einem Umgehäuse umgeben ist, an welches die Steckeraufnahme für einen Anschlussstecker der elektrischen Anschlusseinheit einstückig angeformt ist. Insbesondere dann, wenn dieses den Elektromotor aufnehmende Umgehäuse rotationssymmetrisch als zylindrischer Topf ausgebildet ist, kann durch Verdrehen dieses Topfes die Richtung der Aufnahme der Anschlussstecker in Umfangsrichtung beliebig ausgerichtet werden. Bereits hierdurch wird man vielen unterschiedlichen Kundenanforderungen gerecht, welche ihren elektrischen Steckanschluss jeweils in unterschiedlichen radialen Richtungen vorsehen.

Die erfindungsgemäße Aktuatoreinrichtung wird nachfolgend in Zusammenhang mit Ausführungsbeispielen und insgesamt zehn Figuren näher erläutert. Es zeigen:
- Figur 1: eine perspektivische Ansicht eines Ausführungsbeispiels einer Aktuatoranordnung mit einer in einem Gehäuse sitzenden Getriebeeinheit,
- Figur 2: die in Figur 1 gezeigte Aktuatoranordnung in perspektivischer Ansicht mit eingesetztem Befestigungsmittel,
- Figur 3: eine ähnliche Ansicht wie Figur 2, jedoch mit noch nicht montierten Befestigungsmitteln,
- Figur 4: ein Gehäuseteil der Aktuatoranordnung gemäß Figur 1 bis Figur 3 in Form eines Getriebeträgertopfes, welcher eine Vielzahl von Getriebeelementen aufnimmt,
- Figur 5: eine erste Variante eines Umgehäuses zur Aufnahme eines Elektromotors mit senkrecht zur Motorachse wegerstreckender Steckeraufnahme,
- Figur 6: ein ähnliches Umgehäuse wie in Figur 5, wobei die Steckeraufnahme parallel zur Motorachse ausgerichtet ist,
- Figur 7: ein zweites Ausführungsbeispiel einer Aktuatoranordnung, bei dem die Befestigungsmittel als Aufsteckteil ausgebildet sind in Explosionsdarstellung,
- Figur 8: eine ähnliche Ansicht wie in Figur 7, allerdings im zusammengebauten Zustand,
- Figur 9: verschiedene Ansichten von Getriebeträgertöpfen mit Unterschiedlichem Achsabstand zwischen Motorwelle und Abtriebswelle der Getriebeeinheit und
- Figur 10: entsprechende zu den in Figur 9 dargestellten Getriebeträgertöpfen passende Gehäusedeckel.

In den nachfolgenden Figuren bezeichnen, sofern nicht anders angegeben, gleiche Bezugszeichen gleiche Teile mit gleicher Bedeutung.

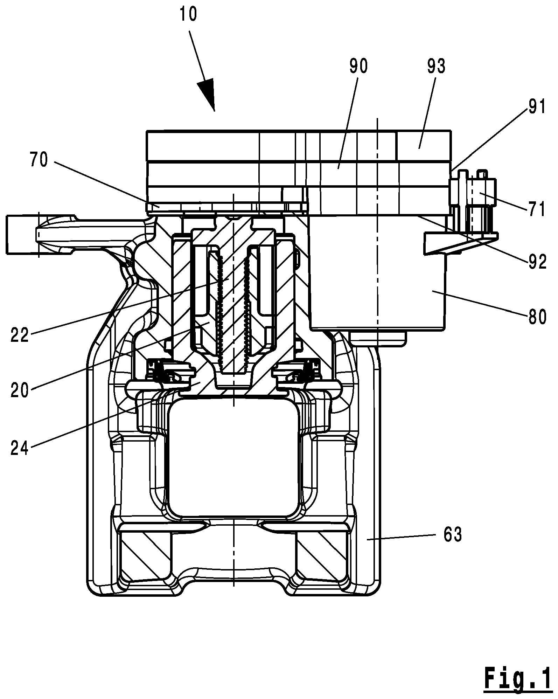

In Figur 1 ist in perspektivischer Darstellung eine Aktuatoranordnung 10 gezeigt, welche über noch zu erläuternde Befestigungsmittel 60 an eine Bremsbelagverstelleinheit 20 festgelegt ist. Diese Bremsbelagverstelleinheit 20 verfügt intern über eine Drehspindel 22, welche von der Aktuatoranordnung 10 in Drehung versetzbar ist, um einen in der Bremsbelagverstelleinheit 20 befindlichen Kolben 24 zur Verstellung von Bremsbelägen eines Bremssattels 30, der ebenfalls nur schematisch in Figur 1 angedeutet ist, aufeinander zu zu bewegen. Die Bremsbelagverstelleinheit 20 und der Bremssattel 30 sind an sich bekannt, sodass auf diese Bestandteile der elektrischen Bremse nicht näher eingegangen wird.

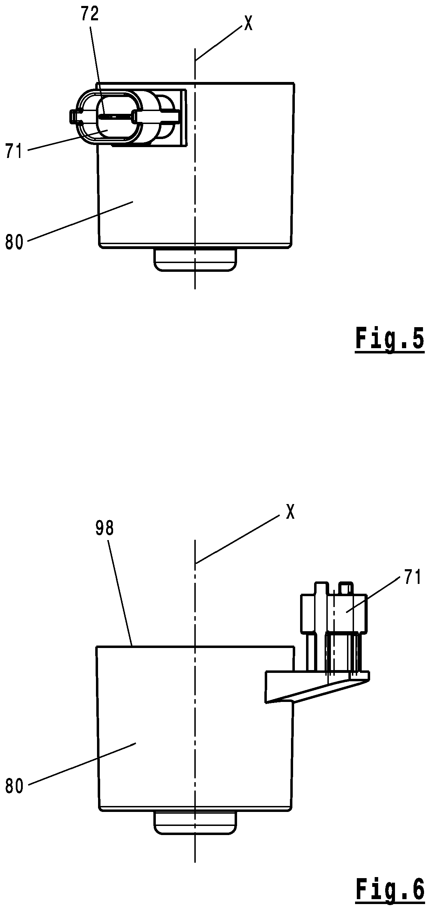

Die Aktuatoranordnung 10 verfügt über eine elektromotorische Antriebseinheit mit einem Elektromotor 40. Dieser Elektromotor 40 weist üblicherweise bereits ein eigenes, z.B. metallisches, zylindrisches Gehäuse auf, an welchem einseitig eine Motorwelle herausragt. Diese Motorwelle ist dabei in der Regel mit einem Motorritzel drehfest verbunden. Der komplette Elektromotor 40 mit seinem eigenen Gehäuse sitzt in einem Umgehäuse 80, welches den Elektromotor 40 topfförmig umgibt. Dieses Umgehäuse 80 besteht vorzugsweise aus Kunststoff und ist so gestaltet, dass der komplette Elektromotor 40 darin Platz findet. Aus dem oben offenen Ende des Umgehäuses 80 ragt die Motorwelle 42 mit dem Motorritzel 43 heraus. Auf der zylindrischen Umfangsfläche der Außenwandung des Umgehäuses 80 ist eine Steckeraufnahme 71 einstückig angeformt. Wie besonders Figur 5 deutlich zeigt, befinden sich innerhalb dieser Steckeraufnahme 71 Steckkontakte 72, welche elektrisch mit dem Elektromotor 40 in Verbindung stehen, sodass ein in die Steckeraufnahme 71 eingesteckter elektrischer Steckverbinder, der mit einer entsprechenden elektronischen Ansteuereinheit in Verbindung steht, den Elektromotor mit elektrischen Signalen beaufschlagen kann, insbesondere aber auch mit einer geeigneten Stromversorgung versorgt.

Das Umgehäuse 80 ist an den Boden 92 eines weiteren Gehäuseteils 90 festgelegt, wobei dieses weitere Gehäuseteil 90 als Aufnahme für eine Getriebeeinheit vorgesehen ist und deshalb im Folgenden als Getriebeträgertopf 90 bezeichnet wird. Der Boden 92 dieses Getriebeträgertopfes 90 verfügt über eine erste Ausnehmung 94, durch welche die erwähnte Motorwelle 42 samt Motorritzel 93 ragt. Das Festlegen des Umgehäuses 80 an dem Boden 92 des Getriebeträgertopfes 90 erfolgt, sofern der Getriebeträgertopf 90 ebenfalls aus Kunststoff besteht, mittels einer stoffschlüssiger Verbindung, beispielsweise durch Ultraschallschweißen, Laserschweißen oder Verkleben. Andere Verbindungsmöglichkeiten sind ebenfalls denkbar. Das Umgehäuse 80 kann dabei in beliebiger Richtung verdreht ausgerichtet werden, sodass die Steckeraufnahme 71 in einem beliebigen Winkel, den ein Kunde vorschreibt, zu liegen kommt. Ist das Umgehäuse 80 entsprechend ausgerichtet, erfolgt anschließend das Festlegen des Umgehäuses 80 am Boden 92 des Getriebeträgertopfes 90.

Mögliche Ausführungsformen des Umgehäuses 80 für den Elektromotor 40 zeigen die Figuren 5 und 6. In Figur 5 befindet sich die Steckeraufnahme 71 an der äußeren zylindrischen Wandung des Umgehäuses 80 und ragt bezogen auf die Längsachse X des Umgehäuses 80 senkrecht von dieser weg. Im Ausführungsbeispiel von Figur 6 ist die Steckeraufnahme 71 dagegen parallel zur Längsachse X ausgerichtet. Andere Ausführungsformen und Platzierungen der Steckeraufnahmen sind ebenfalls möglich.

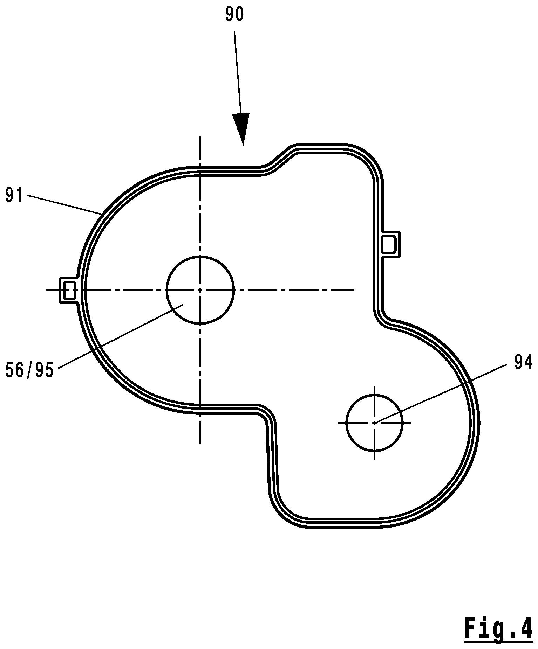

Der Getriebeträgertopf 90 weist am Boden 92 in zum Elektromotor 40 abgewandter Richtung eine umlaufende Wand 91 auf, sodass sich insgesamt eine Topfform des Getriebeträgertopfes 90 ergibt. Zwischen der Wand 91 liegen weitere Getriebeelemente der Getriebeeinheit. Eine Draufsicht von oben in die topfartige Vertiefung des Getriebeträgertopfes 90 zeigt Figur 4. Dort ist auch die bereits erwähnte erste Ausnehmung 94 zu erkennen, durch welche die Motorwelle 42 samt Motorritzel 43 geführt wird. Diese Ausgangswelle 56 der Getriebeeinheit steht dann, wie bereits erläutert, mit der Drehspindel 22 der Bremsbelagverstelleinheit 20 drehfest in Verbindung, um die Verlagerung des Kolbens 24 für die Verstellung des Bremssattels zu bewirken.

Wie Figur 1 zeigt, ist der Getriebeträgertopf 90 nach oben hin von einen Gehäusedeckel 93 abgeschlossen, welche gemeinsam mit dem Getriebeträgertopf Teile der Getriebeeinheit aufnehmen.

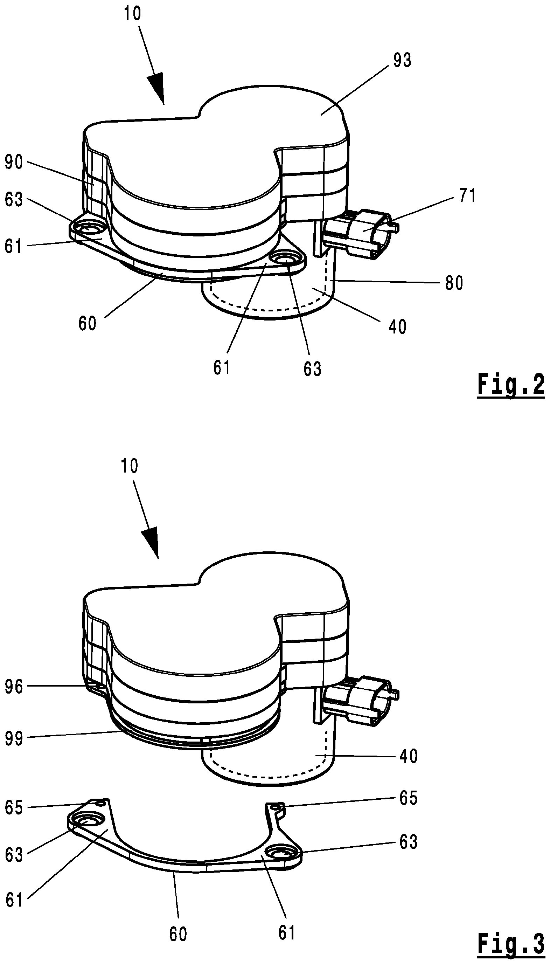

Wie die bisher erläuterten Darstellungen in Figur 1 und Figur 2 zeigen, sind die Achsen der Motorwelle 42 und der Ausgangswelle 56 parallel zueinander ausgerichtet, wobei der Elektromotor 40 samt Umgehäuse 80 in unmittelbarer Nachbarschaft und axial parallel zu der Bremsbelagverstelleinheit 20 ausgerichtet ist.

Im Zusammenhang mit den Figuren 2 und 3 wird gezeigt, wie ein geeignetes Befestigungsmittel 60 gestaltet sein kann, um die Aktuatoranordnung 10 an der Bremsbelagverstelleinheit 20, beziehungsweise dem Bremssattel 30 zu befestigen.

Hierfür ist das Befestigungsmittel 60 als spangenförmiges oder mindestens annähernd U-förmiges Einschiebeteil gestaltet. Dieses Einschiebeteil kann zum Beispiel ein metallisches Stanzteil sein, welches U-förmig in eine entsprechende, umlaufende Nut 99 am Außenumfang des Getriebeträgertopfes 90 eingreift.

Dabei verfügt dieses Befestigungsmittel 60 über eine oder mehrere Befestigungsöffnungen 63, durch welche entsprechende Befestigungsschrauben geführt werden können, um die Aktuatoranordnung 10 am Bremssattel 30 festzuschrauben.

Die Befestigungsöffnungen 63, von denen in Figur 2 und Figur 3 jeweils zwei vorgesehen sind, befinden sich auf Befestigungslaschen 61, die randseitig aus dem Getriebeträgertopf 90 hervorstehen, wenn das spangenförmige Befestigungsmittel 60 in die Nut 99 am Außenumfang des Getriebeträgertopfes 90 eingeführt ist. Um das Befestigungsmittel 60 in oder am Getriebeträgertopf 90 festzulegen, kann - wie Figur 3 deutlich zeigt - , an den Enden der beiden U-förmigen Schenkel des Befestigungsmittels 60 jeweils eine Bohrung 65 vorgesehen sein, die bei eingeschobenem Befestigungsmittel 60 mit entsprechenden Bohrungen 96 im Getriebeträgertopf 90 korrespondieren, so dass Bolzen oder Stifte durch diese Öffnungen 63, 96 geführt werden können, um das Befestigungsmittel 60 im Getriebeträgertopf 90 gegebenenfalls zusätzlich zu fixieren.

Um den Bedürfnissen von unterschiedlichen Einbauforderungen gerecht zu werden, kann durch das Bereitstellen von verschiedenen Befestigungsmitteln 60 eine hohe Variabilität hinsichtlich der Befestigungsmöglichkeiten geschaffen werden. Es ist dabei lediglich notwendig die erforderlichen Befestigungsöffnungen 63 und die zugehörenden Befestigungslaschen 61 an anderer Stelle, wie in den Figuren 2 und 3 gezeigt, zu platzieren. Zusätzlich ist es ebenfalls möglich, mehr als zwei Befestigungsöffnungen 63 an dem Befestigungsmittel 60 vorzusehen. Um den unterschiedlichen Befestigungsbedingungen Rechnung zu tragen ist es lediglich notwendig, ein entsprechend vorbereitetes anderes Befestigungsmittel 60 in die Nut 99 des Gehäuseträgertopfes 90 einzuführen und dort festzulegen.

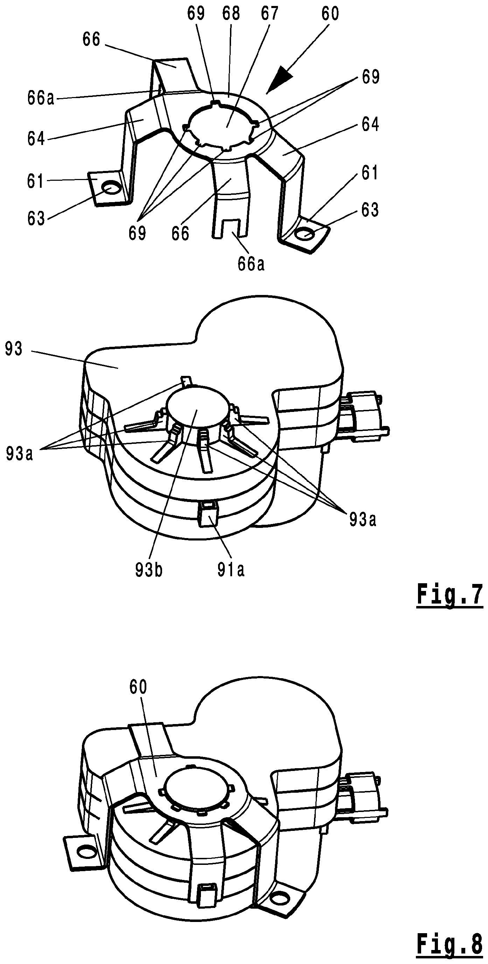

Eine andere Möglichkeit, die Aktuatoranordnung 10 an einer Bremsbelagverstelleinheit 20 zu befestigen, ist anhand der Figuren 7 und 8 gezeigt. Dort verfügt der Getriebeträgertopf 90 nicht über eine sich um beide Teile des Getriebeträgertopfes 90 herumlaufende Nut 99, in den das Befestigungsmittel 60 eingeschoben wird, sondern vielmehr, über ein Aufsteckteil bzw. einen Aufsteckkorb, welcher von oben her auf die Aktuatoranordnung 90 und insbesondere auf den Gehäusedeckel 93 drehfest aufgesetzt wird und mit vier Armen 64,66 den Getriebeträgertopf 90 umgreift. Das wiederum mit dem Bezugszeichen 60 markierte korbartige Befestigungsteil verfügt über eine mittige Öffnung 67, welche von einem ringförmigen Befestigungsteil 68 umrandet ist. Dieses ringförmige Befestigungsteil 68 weist an ihrer mittigen Öffnung 67 mehrere, vorliegend sieben Nuten 69 auf, die in entsprechend hervorspringende Nasen 93a am Gehäusedeckel 93 eingreifen können, so dass das Befestigungsteil 60 dort drehfest angeordnet werden kann. Durch die Öffnung 67 des Befestigungsteils 60 ragt eine entsprechend ausgebildeter Zapfen 93b des Gehäusedeckels 93.

Von dem ringförmigen Befestigungsteil 98 erstrecken sich insgesamt vier nach unten abgewinkelte Beine 66, 64 weg, die so ausgeführt und abgewinkelt sind, dass sie die Aktuatoranordnung 10, d. h. den Gehäusedeckel 93 sowie den Getriebeträgertopf 90 umgreifen können. Die beiden Beine 66 verfügen ebenfalls über Nuten 66a an ihrem Ende, welche in entsprechende hervorspringende Nasen 90a des Getriebeträgertopfes 90 greifen. Dadurch ist eine zusätzliche Verdrehfestigkeit sichergestellt. Die beiden anderen am Befestigungsteil 60 befindlichen Beine 64 sind an ihrem distalen Ende um etwa 90° nach außen abgewinkelt und verfügen dort über Befestigungslaschen 61, in welche wiederum Befestigungsöffnungen 63 eingearbeitet sind. Mit diesen Befestigungsöffnungen 63 kann die gesamte Aktuatoranordnung 10 dann an der Bremsbelagverstelleinrichtung 20 festgeschraubt werden.

Es versteht sich, dass durch einfaches Verändern beispielsweise der Winkellage der Befestigungslaschen 64 andere Befestigungsbedingungen von Kunden für die Aktuatoranordnung 10 erfüllt werden können. Es müssen lediglich die Befestigungsbohrungen 63 mit den Beinen 64 an dem Befestigungsteil 60 versetzt werden. Durch einen einfachen Austausch dieses Befestigungsmittel 60 ist deshalb eine große Varianz der Befestigungsmöglichkeiten der im übrigen unveränderten Aktuatoranordnung 10 gewährleistet.

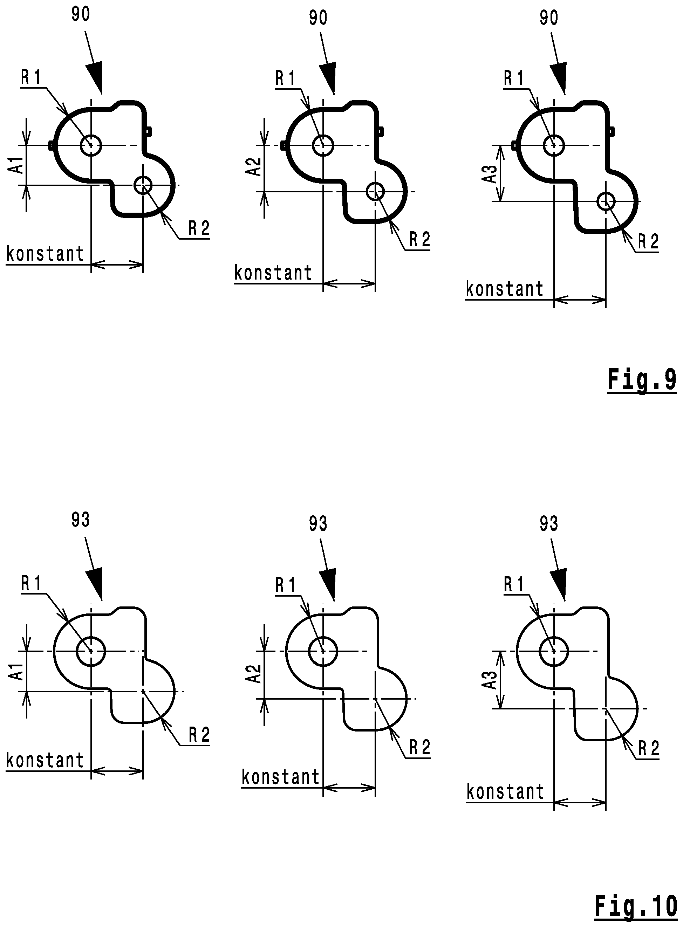

Im Zusammenhang mit den Figuren 9 und 10 wird die Vielfältigkeit der vorgeschlagenen Aktuatoranordnung nochmals dargestellt. In Figur 9 ist die Draufsicht von oben in das Innere des Getriebeträgertopfes 90 dargestellt. Dabei sind drei verschieden große Getriebeträgertöpfe 90 gezeigt, welche sich lediglich dadurch unterscheiden, dass die Achsabstände A1, A2, A3 zwischen den Ausnehmungen 94, 95 unterschiedlich groß sind. Die einzelnen Schnittstellen zum Befestigen des Elektromotors 40 bzw. des Umgehäuses 80, in dem der Elektromotor 40 platziert ist und die Schnittstelle für das im Zusammenhang mit den Figuren 2 und 3 erläuterte, spangenartige Befestigungsmittel 60 bleiben dagegen unverändert. Dies bedeutet, dass die in Figur 9 eingezeichneten Radien R1, R2 an den Getriebeträgertöpfen 90 weiterhin identisch sind, um das erwähnte Befestigungsmittel 90 und das Umgehäuse 80 daran zu befestigen. Der Radius R1 entspricht mindestens annähernd dem Radius des U-förmigen bzw. spangenförmigen Befestigungsmittel 60 von Figur 2 und Figur 3, während der Radius R2 die Fügestelle zu dem Umgehäuse 80, in dem Elektromotor 40 sitzt, definiert. In Figur 10 sind die zu den verschieden großen Getriebeträgertöpfen 90 von Figur 9 passenden Gehäusedeckels 93 dargestellt, die sich ebenfalls in ihrer Länge unterscheiden.

### Bezugszeichenliste

- 10: Aktuatoranordnung
- 20: Bremsbelagverstelleinheit
- 22: Drehspindel
- 24: Kolben
- 30: Bremssattel
- 40: Elektromotor
- 41: Motorgehäuse
- 43: Motorritzel
- 50: Getriebeeinheit
- 51: Getriebeelement
- 52: Getriebeelement, Spindel
- 53: Getriebeelement
- 54: Getriebeelement
- 56: Ausgangswelle
- 60: Befestigungsmittel
- 61: Befestigungslasche
- 63: Befestigungsöffnung
- 64: Beine
- 65: Bohrung
- 66: Beine
- 66a: Nuten
- 67: Öffnung
- 68: Ringförmiges Befestigungsteil
- 69: Nuten
- 71: Steckeraufnahme
- 72: Steckkontakte
- 80: Umgehäuse
- 90: Gehäuse, Getriebeträgertopf
- 90a: Nasen
- 91: Wand
- 91a: Rastnase an Wand 91 des Gehäuses 90
- 92: Boden
- 93: Gehäusedeckel
- 93a: Rastnasen am Gehäusedeckel
- 93b: Zapfen
- 94: Ausnehmung
- 95: Ausnehmung
- 96: Bohrung
- 99: Nut
- 100: Bolzen
- A1: Achsabstand
- A2: Achsabstand
- A3: Achsabstand
- R1: Radius
- R2: Radius
- X: Längsachse

## Patentansprüche

1. Aktuatoreinrichtung für eine Bremse, insbesondere eine elektrische Parkbremse oder elektromechanische Betriebsbremse mit einer von der Aktuaroranordnung (10) antreibbaren Bremsbelagverstelleinheit (20), wobei die Aktuatoranordnung (10) modular aufgebaut ist und folgende Merkmale aufweist:
- einen Elektromotor (40),
- eine in einem Gehäuse (90') sitzende Getriebeeinheit, die mit dem Elektromotor (40) gekoppelt ist und ausgangsseitig mit der Bremsbelagverstelleinheit (20) in Wirkverbindung steht,
- Befestigungsmittel (60) zum Befestigen der Aktuatoranordnung (10) am Bremssattel (30) oder der Bremsbelagverstelleinheit (20),
- eine Steckeraufnahme (71) für einen Anschlussstecker einer elektrischen Anschlusseinheit, die mit dem Elektromotor (40) elektrisch verbunden ist, **gekennzeichnet durch** folgende Merkmale:
- die Befestigungsmittel (60) sind als separates Austauschteil ausgebildet, mit mindestens einer Befestigungsöffnung (63) versehen und verdrehfest an der Aktuatoranordnung (10) festgelegt.

2. Aktuatoranordnung nach Anspruch 1,
**dadurch gekennzeichnet, dass** das Umgehäuse (80) aus Kunststoff besteht und als zylindrischer Kunststofftopf ausgebildet ist, in welchem der Elektromotor (40) mit seinem Motorgehäuse (41) aufgenommen ist, wobei sich die Steckeraufnahme (71) einstückig von einer zylindrischen Wandung (81) des Kunststofftopfes wegerstreckt.

3. Aktuatoranordnung nach Anspruch 2,
**dadurch gekennzeichnet, dass** in dem Umgehäuse (80) die gesamte elektrische Kontaktierung der Antriebseinheit angeordnet ist.

4. Aktuatoranordnung nach Anspruch 1, 2 oder 3,
**dadurch gekennzeichnet, dass** die Getriebeeinheit (50) mit ihren Getriebeelementen (51 - 54) im Inneren eines ein Gehäuseteil des Gehäuses (90) bildenden Getriebeträgertopfes sitzt, welcher an seinem Boden (92) zwei Ausnehmungen (94, 95) aufweist, durch welche eine Motorwelle (42) des Elektromotors (40) sowie eine Ausgangswelle (56) der Getriebeeinheit (50) ragt und wobei der Getriebeträgertopf (90) auf seiner den beiden Ausnehmungen (94, 95) gegenüberliegenden Seite von einem Gehäusedeckel (93) verschließbar ist.

5. Aktuatoranordnung nach einem der Ansprüche 1 bis 4,
**dadurch gekennzeichnet, dass** der Getriebeträgertopf (90) aus Kunststoff besteht und feststehend an einer rotationssymmetrischen Fügeverbindung (98) mit dem den Elektromotor (40) aufnehmenden Umgehäuse (80) feststehend aneinander gefügt sind, insbesondere durch eine stoffschlüssige Verbindung, wie Ultraschallschweißung, Laserschweißung oder Verklebung.

6. Aktuatoranordnung nach einem der Ansprüche 1 bis 5,
**dadurch gekennzeichnet, dass** die Befestigungsmittel (60) als metallisches Stanzteil oder Kunststoffteil ausgebildet sind.

7. Aktuatoranordnung nach einem der Ansprüche 1 bis 6,
**dadurch gekennzeichnet, dass** die Befestigungsmittel (60) als Einschiebeteil ausgebildet sind, welche in eine Nut (99) des Getriebeträgerkopfes (90) einfügbar und dort verdrehfest festlegbar ist.

8. Aktuatoranordnung nach Anspruch 7,
**dadurch gekennzeichnet, dass** das Einschiebeteil spangenartig oder mindestens annähernd U-förmig gestaltet ist.

9. Aktuatoranordnung nach Anspruch 7 oder 8,
**dadurch gekennzeichnet, dass** das Einschiebeteil mittels Stiften oder Bolzen (10) mit dem Geteriebeträgertopf (90) verbindbar ist.

10. Aktuatoranordnung nach einem der Ansprüche 1 bis 7,
**dadurch gekennzeichnet, dass** die Befestigungsmittel (60) als Aufsteckteil ausgebildet sind, welches auf der Aktuatoranordnung (10) drehfest aufsitzt.

11. Aktuatoranordnung nach Anspruch 10,
**dadurch gekennzeichnet, dass** das Aufsteckteil an Rastnasen (93a) des Getriebeträgertopfes (90) und/oder des Gehäusedeckels (93) der Aktuatoranordnung (10) festgelegt ist.

12. Aktuatoranordnung nach einem der Ansprüche 1 bis 11,
**dadurch gekennzeichnet, dass** der Getriebeträgertopf (90) und der Gehäusedeckel (93) jeweils in unterschiedlichen Größen vorgehalten werden, wobei die Schnittstelle zu dem Umgehäuse (80) des Elektromotors (40) immer rotationssymmetrisch mit identischem Durchmesser ausgebildet ist.

13. Aktuatoranordnung nach einem der vorherigen Ansprüche,
**dadurch gekennzeichnet, dass** der Elektromotor (40) ist mindestens teilweise von einem Umgehäuse (80) umgeben, an welches die Steckeraufnahme (71) für den Anschlussstecker (71) einstückig angeformt ist

## Claims

1. An actuator arrangement for a brake, particularly an electrical parking brake or electromechanical service brake, having a brake pad adjustment device (20) which can be driven by the actuator arrangement (10), wherein the actuator arrangement (10) has a modular construction and the following features:
- an electric motor (40),
- a gear unit, positioned in a housing (90'), which is coupled to the electric motor (40) and is operatively connected on the output side to the brake pad adjustment device (20),
- fastening means (60) for fastening the actuator arrangement (10) to the brake caliper (30) or the brake pad adjustment device (20),
- a plug receptacle (71) for a plug connector for an electrical connecting unit which is connected to the electric motor (40),
**characterised by** the following features:
the fastening means (60) are designed as a separate replacement part, provided with at least one fastening opening (63) and fixed non-rotatably to the actuator arrangement (10).

2. Actuator arrangement according to claim 1, **characterized in that** the housing (80) is made from plastic and is constructed as a cylindrical plastic container, in which the electric motor (40) with its motor housing (41) is received, wherein the plug receptacle (71) extends integrally away from a cylindrical wall (81) of the plastic container.

3. Actuator arrangement according to claim 2, **characterised in that** the entire electrical contacting means of the drive unit is arranged in the housing (80).

4. Actuator arrangement according to one of claims 1, 2 or 3, **characterised in that** the gear unit (50) with its gear elements (51 - 54) is situated in the interior of a gear carrier container which forms a housing part of the housing (90) and which has on its base (92) two recesses (94, 95) through which a motor shaft (42) of the electric motor (40) and also an output shaft (56) of the gear unit (50) project, and wherein the gear carrier container (90) can be closed on the side thereof which is opposite the two recesses (94, 95) by a housing cover (93).

5. Actuator arrangement according to one of claims 1 to 4, **characterised in that** the gear carrier container (90) is made from plastic and is fixedly joined at a rotationally symmetrical joint (98) to the housing (80) which receives the electric motor (40), this joining taking place in particular by an integral connection, such as ultrasonic welding, laser welding or adhesion.

6. Actuator arrangement according to one of claims 1 to 5, **characterised in that** the fastening means (60) are designed as a stamped metal part or a plastic part.

7. Actuator arrangement according to one of claims 1 to 6, **characterised in that** the fastening means (60) are designed as an insert part which can be inserted into a groove (99) of the gear carrier container (90) and can be fixed therein non-rotatably.

8. Actuator arrangement according to claim 7, **characterised in that** the insert part has a clasp-like or at least approximately U-shaped design.

9. Actuator arrangement according to claim 7 or 8, **characterised in that** the insert part can be connected to the gear carrier container (90) by means of pins or bolts (10).

10. Actuator arrangement according to one of claims 1 to 7, **characterised in that** the fastening means (60) are designed as a plug part which is seated non-rotatably on the actuator arrangement (10).

11. Actuator arrangement according to claim 10, **characterised in that** the plug part is fixed to latching lugs (93a) of the gear carrier container (90) and/or the housing cover (93) of the actuator arrangement (10).

12. Actuator arrangement according to one of claims 1 to 11, **characterised in that** the gear carrier container (90) and the housing cover (93) are each available in different sizes, wherein the interface to the housing (80) surrounding the electric motor (40) is always rotationally symmetrical and designed with the identical diameter.

13. Actuator arrangement according to one of the preceding claims, **characterised in that** the electric motor (40) is surrounded at least partially by a housing (80) on which the plug receptacle (71) for the plug connector (71) is integrally moulded.

## Revendications

1. Dispositif d'actionneur destiné à un frein, en particulier à un frein de stationnement électrique ou à un frein de service électromécanique comprenant une unité de réglage des plaquettes de frein (20) pouvant être actionné par le dispositif d'actionneur (10), le dispositif d'actionneur (10) étant modulaire et comprenant les éléments suivants :
- un moteur électrique (40),
- une unité de transmission située dans un carter (90') qui est couplé au moteur électrique (40) et est en liaison fonctionnelle avec l'unité de réglage des plaquettes de frein (20) côté sortie,
- des moyens de fixation (60) permettant de fixer le dispositif d'actionneur (10) à l'étrier de frein (30) ou à l'unité de réglage des plaquettes de frein (20),
- un logement de réception (71) d'une fiche de connexion d'une unité de connexion électrique qui est reliée électriquement au moteur électrique (40),
**caractérisé en ce que**
- les moyens de fixation (60) sont réalisés sous la forme d'une pièce interchangeable séparée ayant au moins une ouverture de fixation (63) et fixée solidairement en rotation au dispositif d'actionneur (10).

2. Dispositif d'actionneur conforme à la revendication 1,
**caractérisé en ce que**
le carter enveloppe (80) est en matériau synthétique et est réalisé sous la forme d'un pot en matériau synthétique cylindrique dans lequel est logé le moteur électrique (40) avec son carter (41), le logement d'enfichage (71) s'étendant en une seule pièce à partir de la paroi cylindrique (81) du pot en matériau synthétique.

3. Dispositif d'actionneur conforme à la revendication 2,
**caractérisé en ce que**
la totalité du système de contact électrique de l'unité d'entraînement est montée dans le carter enveloppe (80).

4. Dispositif d'actionneur conforme à la revendication 1, 2 ou 3,
**caractérisé en ce que**
l'unité de transmission (50) est située avec ses éléments de transmission (51, 54) à la partie interne d'un pot de support de la transmission formant une partie du carter (90) qui comporte sur son fond (92) deux évidements (94, 95) au travers desquels passe l'arbre (42) du moteur électrique (40) ainsi que l'arbre de sortie (56) de l'unité de transmission (50), et le pot de support de la transmission (90) peut être fermé sur sa face située à l'opposé des deux évidements (94, 95) par un couvercle de carter (93).

5. Dispositif d'actionneur conforme à l'une des revendications 1 à 4,
**caractérisé en ce que**
le pot de support de la transmission (90) est en matériau synthétique, et est assemblé solidairement par un assemblage par aboutement (98) symétrique en rotation avec le carter enveloppe (80) recevant le moteur électrique (40), en particulier par une liaison par la matière telle qu'une soudure aux ultrasons une soudure laser ou un collage.

6. Dispositif d'actionneur conforme à l'une des revendications 1 à 5,
**caractérisé en ce que**
les moyens de fixation (60) sont réalisés sous la forme d'une pièce métallique estampée ou d'une pièce en matériau synthétique.

7. Dispositif d'actionneur conforme à l'unes des revendications 1 à 6,
**caractérisé en ce que**
les moyens de fixation (60) sont réalisés sous la forme d'une pièce coulissante qui peut être insérée dans une rainure (99) du pot de support de la transmission (90) et y être fixée solidairement en rotation.

8. Dispositif d'actionneur conforme à la revendication 7,
**caractérisé en ce que**
la pièce coulissante est en forme d'agrafe ou au moins essentiellement en forme de U.

9. Dispositif d'actionneur conforme à la revendication 7 ou 8,
**caractérisé en ce que**
la pièce coulissante peut être reliée au pot de support de la transmission (90) au moyen de tiges ou de goujons (10).

10. Dispositif d'actionneur conforme à l'une des revendications 1 à 7,
**caractérisé en ce que**
les moyens de fixation (60) sont réalisés sous la forme d'une pièce d'enfichage qui est positionnée solidairement en rotation sur le dispositif d'actionneur (10).

11. Dispositif d'actionneur conforme à la revendication 10,
**caractérisé en ce que**
la pièce d'enfichage est fixée sur des becs d'encliquetage (93a) du pot de support de la transmission (90) et/ou du couvercle du carter (93) du dispositif d'actionneur (10).

12. Dispositif d'actionneur conforme à l'une des revendications 1 à 11,
**caractérisé en ce que**
le pot de support de la transmission (90) et le couvercle du boîtier (93) sont respectivement stockés selon des dimensions différentes et l'interface avec le carter enveloppe (80) du moteur électrique (40) est toujours réalisé symétriquement en rotation avec le même diamètre.

13. Dispositif d'actionneur conforme à l'une des revendications précédentes,
**caractérisé en ce que**
le moteur électrique (40) est au moins en partie entouré par un carter enveloppe (80) sur lequel est formé en une seule pièce le logement de réception (71) de la fiche de connexion.
